# EUROPEAN PATENT SPECIFICATION

(11) **EP 0 938 524 B1**
(45) Date of publication and mention of the grant of the patent: **05.09.2001**
(21) Application number: 97951231.6
(22) Date of filing: 14.11.1997
(51) Int. Cl.: C08L 53/02, C08L 23/02

(54) **MODIFIED STYRENIC BLOCK COPOLYMER COMPOUNDS HAVING IMPROVED ELASTIC PERFORMANCE**
MODIFIZIERTE VINYLAROMATISCHBLOCKCOPOLYMERZUSAMMENSETZUNGEN MIT EINER VERBESSERTEN ELASTISCHLEISTUNG
COMPOSES MODIFIES DE COPOLYMERE STYRENIQUE SEQUENCE AYANT DES PROPRIETES ELASTIQUES AMELIOREES

(30) Priority: 14.11.1996 US 749047
(43) Date of publication of application: 01.09.1999
(73) Proprietor: SHELL INTERNATIONALE RESEARCH MAATSCHAPPIJ B.V., 2596 HR Den Haag (NL)
(72) Inventor: DJIAUW, Lie, Khong, Houston, TX 77095 (US); MODIC, Michael, John, Houston, TX 77077 (US)
(74) Representative: Kortekaas, Marcellinus C. J. A.
(86) International application number: EP9706436
(87) International publication number: WO9821279

(56) References cited:
- EP-A- 0 304 124
- EP-A- 0 586 937
- EP-A- 0 664 327
- EP-A- 0 712 892
- US-A- 4 663 220
- US-A- 4 789 699
- US-A- 5 286 781
- US-A- 5 308 906

## Description

The present invention relates to extruding of elastomeric polymer compositions, more specifically to such compositions that are extruded as fibers or films.

The present invention also relates to diaper waistbands or non-woven fabrics prepared from the elastic films or fibers. Extrudable elastomeric compositions which can be easily compression molded or melt blown into elastic fibers or films having low stress relaxation, low hysteresis, and high recoverable energy are described in United States Patents Nos. 4,663,220, 4,789,699, 4,970,259, or 5,093,422. The elastomeric fibers or films are useful in making a variety of applications such as diaper waistbands and non-woven fabrics.

Polystyrene-poly(ethylene-butylene)-polystyrene elastomeric block copolymers and polystyrene-poly(ethylene-propylene)-polystyrene elastomeric block copolymers have been blended with other materials such as, for example, polyclefins and tackifying resins to form extrudable elastomeric compositions which can be more easily extruded into elastic fibers or films having improved processing and/or bonding properties. While the additives improve the extrusion properties of the compositions and the processing and/or bonding properties of the elastic fibers or films, such additives have an adverse affect on the elastic properties of the resulting fiber or film, especially at temperatures above 25°C.

It is an object of the present invention to improve the elastic and stress relaxation properties of block copolymers and their compounds in combination with a polyolefin and a tackifying resin. A further object is to achieve this desired improvement while maintaining the required flow characteristics of the polymer and the composition containing it. In order to be useful in the present invention, the melt flow rate of any such composition is typically at least 1 g/ 10 min. at 230°C/5Kg, preferably from 1 g/10 min at 230°C/5Kg to 50 g/10 min. at 230°C/5Kg .

The present invention is an improved polymer composition for extruding fibers or films having excellent stress relaxation at elevated temperatures. The compositions comprise a selectively hydrogenated block copolymer of a monovinylaromatic monomer and a conjugated diene monomer, wherein the number average molecular weight of at least one of the monovinylaromatic blocks is from 6,000 to 12,000, and the monovinylaromatic content of the block copolymer is from 13 to 24 % by weight (%wt) of the block copolymer. The total number average molecular weight of the polymer preferably ranges from 70,000 to 120,000 if the polymer is linear. The compositions further comprise 12 to 60 %wt of a polyolefin and 13 to 28 %wt of a tackifying resin. The polyolefin can be a crystalline polyolefin or an elastomeric polyolefin.

The extrudable elastomeric composition of the present invention is an improvement of the extrudable compositions described in United States Patents Nos. 4,970,259 and 5,093,422. The known compositions include one or more styrenic block copolymers, typically a polystyrene-poly(ethylene-butylene)-polystyrene (S-EB-S) or a polystyrene-poly(ethylene-propylene)-polystyrene (S-EP-S) elastomeric block copolymer which is produced by hydrogenating a polystyrene-polybutadiene-polystyrene or polystyrene-polyisoprene-polystyrene block copolymer. The extrudable compositions further comprise a polyolefin and a tackifying resin. The extrudable elastomeric composition may also include an extending oil.

In the present invention, the styrenic block copolymers used have at least one larger monoalkenylarene block and, preferably, a larger block of the saturated block of a poly(conjugated diene) in comparison to conventional styrenic block copolymers used to make elastomeric films and fibers. This change in structure results in improved stress relaxation and hysteresis at higher temperatures.

The styrenic block copolymers have at least two poly(moncalkenylarene) blocks, preferably two polystyrene blocks, separated by a saturated block of a poly(conjugated diene), preferably a saturated polybutadiene or a saturated polyisoprene block. The preferred block copolymers comprise two polystyrene blocks, at least one block having a number average molecular weight from 6,000 to 12,000, preferably from 6,000 to 10,000, and one saturated polybutadiene or saturated polyisoprene midblock, each having a number average molecular weight from 60,000 to 110,000.

Preferably, the block copolymer is linear and has an overall number average molecular weight of from 70,000 to 120,000. According to this invention, at least one monoalkenyl arene block is larger in size than the other block(s).

The largest monoalkenyl arene block is at least 5% larger than the smallest block, preferably at least 10%, more preferably at least 15%, in particular at least 20%.

Preferably, the largest monoalkenyl arene block is at most 80% larger than the smallest block, more preferably at most 70%, even more preferably at most 65%, larger than the smallest block.

For the purpose of this specification, the size of a mono-alkenyl arene block is determined by the number average molecular weight. Thus, it will be appreciated that the other poly(monoalkenylarene) block(s) may have a number average molecular weight inside or outside the above range, typically in the range from 3000 to 15000. The saturated polybutadiene blocks preferably have from 35% to 55% 1,2-configuration and the saturated polyisoprene blocks preferably have greater than 85% 1,4-configuration. The total number average molecular weight of the block polymer is preferably from 70,000 to 120,000, more preferably 70,000 to 100,000, in particular if the block copolymer is linear. The block copolymers preferably have an average polystyrene content from 13% to 24% by weight.

An S-EP-S block copolymer useful in the present invention has an overall number average molecular weight of 81,000, one of the polystyrene endblocks has a number average molecular weight of 7,000, and the polymer has a polystyrene content of 17% by weight.

These polymers may be prepared using free-radical, cationic and anionic initiators or polymerization catalysts. Such polymers may be prepared using bulk, solution or emulsion techniques. In any case, the polymer containing at least ethylenic unsaturation will, generally, be recovered as a solid such as a crumb, a powder, or a pellet.

In general, when solution anionic techniques are used, conjugated diolefin polymers and copolymers of conjugated diolefins and alkenyl aromatic hydrocarbons are prepared by contacting the monomer or monomers to be polymerized simultaneously or sequentially with an organoalkali metal compound in a suitable solvent at a temperature in the range from -150°C to 300°C, preferably at a temperature in the range from 0°C to 100°C.

Particularly effective anionic polymerization initiators are organolithium compounds having the general formula:

RLiₙ

wherein R is an aliphatic, cycloaliphatic, aromatic, or alkyl-substituted aromatic hydrocarbon radical having from 1 to about 20 carbon atoms; and n is an integer of 1 to 4.

In addition to sequential techniques to obtain triblocks, tetrablocks, and higher orders of repeating structures, at least anionic initiators can be used to prepare diblocks of poly(monoalkenyl arene)-poly (conjugated diene), in particular polystyrene-polydiene having a reactive ("live") chain end on the diene block which can be reacted through a coupling agent to create, for example, (S-I)ₓY or (S-B)ₓY structures wherein x is an integer from 2 to 30, Y is a coupling agent, I is isoprene, B is butadiene and greater than 65 percent of S-I or S-B diblocks are chemically attached to the coupling agent. It will be appreciated that the diblock units will not all be identical. In particular at least one poly(monoalkenyl arene) block(s) will be larger than the other poly(monoelkenyl arene) block(s) in the coupled polymer.

Y usually has a molecular weight which is low compared to the polymers being prepared and can be any of a number of materials known in the art, including halogenated organic compounds; halogenated alkyl silanes; alkoxy silanes; various esters such as alkyl and aryl benzoates, difunctional aliphatic esters such as dialkyl adipates and the like; polyfunctional agents such as divinyl benzene (DVB) and low molecular weight polymers of DVB.

Depending on the selected coupling agent the final polymer can be a fully or partially coupled linear triblock polymer (x=2), i.e., S-I-Y-I-S; or branched, radial or star configurations. The coupling agent, being of low molecular weight, does not materially affect the properties of the final polymer. DVB oligomer is commonly used to create star polymers, wherein the number of diene arms can be 7 to 20 or even higher.

In coupled polymers according to the invention not all diblock units will be identical. Diverse "living" diblock units can typically be brought together during the coupling reaction giving a variety of unsymmetrical structures, i.e., the total diblock chain lengths can be different, as well as the sequential block lengths of styrene and diene.

Since the number of S-EB or S-EP polymeric arms in a star polymer can be large, the number average molecular weights of star polymers within the invention can be much larger than those of linear S-EB-S or S-EP-S polymers, i.e., up to 500,000 or even higher such as 750,000 or 1,000,000. Such higher molecular weight polymers have the viscosity of lower molecular weight linear polymers and thus are processable in spite of the high molecular weight.

The styrenic block copolymers must be hydrogenated. In general, the hydrogenation or selective hydrogenation of the polymer may be accomplished using any of the several hydrogenation processes known in the prior art. For example the hydrogenation may be accomplished using methods such as those taught, for example, in U.S. Patent Nos. 3,494,942; 3,634,594; 3,670,054; 3,700,633; and Re. 27,145. The methods known in the prior art and useful in the present invention for hydrogenating polymers containing ethylenic unsaturation and for hydrogenating or selectively hydrogenating polymers containing aromatic and ethylenic unsaturation, involve the use of a suitable catalyst, particularly a catalyst or catalyst precursor comprising an iron group metal atom, particularly nickel or cobalt, and a suitable reducing agent such as an aluminum alkyl.

In general, the hydrogenation will be accomplished in a suitable solvent at a temperature in the range from 20°C to 100°C and at a hydrogen partial pressure in the range from 0.8 MPa (100 psig) to 34.6 Mpa (5,000 psig), preferably 0.8 MPa (100 psig) to 7.9 Mpa (1,000 psig). Catalyst concentrations in the range from 10 ppm (wt) to 500 ppm (wt) of iron group metal (Fe, Co, Ni) based on total solution are generally used and contacting at hydrogenation conditions is generally continued for a period of time in the range from 60 to 240 minutes. After the hydrogenation is completed, the hydrogenation catalyst and catalyst residue will, generally, be separated from the polymer.

The compositions of the present invention further include from 12 %wt to 60 %wt of one or more polyolefins including crystalline or elastomeric polyolefins. Polyolefins which may be utilized in the extrudable composition must be one which, when blended with the elastomeric block copolymer or a mixture of elastomeric block copolymers and subjected to an appropriate combination of elevated pressure and elevated temperature conditions, is extrudable, in blended form, with the elastomeric block copolymer or a mixture of elastomeric block copolymers. In particular, preferred polyolefin materials include polyethylene, polypropylene, and polybutylene, including ethylene copolymers, propylene copolymers, and butylene copolymers. Blends of two or more of the polyolefins may be utilized.

One particular polyethylene may be obtained from Quantum Chemical, U.S.I. Div., under the trade designation Petrothene NA 601-04 (also referred to herein as PE NA 601). Information obtained from Quantum Chemical states that PE NA 601 is a low molecular weight, low density polyethylene for application in the areas of hot melt adhesives and coatings. Quantum Chemical has also stated that PE NA 601 has the following nominal values: (1) a Brookfield viscosity, at 150 degrees Centigrade of 8,500 cP and at 190 degrees Centigrade of 3,300 cP when measured in accordance with ASTM D 3236; (2) a density of 0.903 grams per cubic centimeter when measured in accordance with ASTM D 1505; (3) an equivalent Melt index of 2,000 grams per 10 minutes when measured in accordance with ASTM D 1238; (4) a ring and ball softening point of 102 degrees Centigrade when measured in accordance with ASTM E 28; (5) a tensile strength of 850 pounds per square inch (5.9 MPa) when measured in accordance with ASTM D 638; (6) an elongation of 90 percent when measured in accordance with ASTM D 638; (7) a modulus of rigidity, Tf (45,000) of -34 degrees Centigrade; and (8) a penetration hardness (tenths of mm) at 77 degrees Fahrenheit (25°C) of 3.6.

The polyolefin can also be a metallocene polyolefin having a density from 0.86 to 0.91, a molecular weight distribution (Mn/Mw) less than 3, and a good distribution of ethylene and from 8% to 30% by weight of an a-olefin comonomer having from 4 to 12 carbon atoms, preferably from 4 to 8 carbon atoms. The metallocene polyolefins are polyolefins produced with a metallocene catalyst as described in United States Patents No. 5,322,728 and 5,272,236. Such elastomeric polyolefins are available from DuPont Dow Elastomers under the trademark ENGAGE (ethylene/octene copolymers), from Dow Chemical Company under trademark AFFINITY, and from Exxon Chemical Company under the trademark EXACT (ethylene/butene copolymers). The metallocene polyolefins have low crystallinity when ethylene is copolymerized with from 8% to 30% by weight of an a-olefin comonomer having from 4 to 12 carbon atoms.

Particularily preferred polyolefins are ethylene based copolymers such like low density polyethylene, linear low density polyethylene metallocene polyethylene or a combination of these polyolefin resins.

Various tackifying resins can be used in the present invention. In particular, the purpose of the tackifying resin is to provide an elastomeric web that can act as a pressure sensitive adhesive, e.g., to bond the elastomeric sheet to another web or layer of material. Of course, various tackifying resins are known, and are discussed, e.g., in U.S Patent Nos. 4,789,699; 4,294,936; and 3,783,072. Any tackifier resin can be used which is compatible with the elastomeric polymer and the polyolefin, and can withstand the high processing (e.g., extrusion) temperatures. Generally, hydrogenated hydrocarbon resins are preferred tackifying resins, because of their better temperature stability. The following paragraphs disclose information on three specific tackifying resins, two of which (REGALREZ® and ARKON®P series tackifiers) are examples of hydrogenated hydrocarbon resins, and the ZONATAC®501 Lite being a terpene hydrocarbon. Of course, while the three tackifying resins are specifically discussed, the present invention is not limited to use of such three tackifying resins, and other tackifying resins which are compatible with the other components of the composition and can withstand the high processing temperatures, and can achieve the objectives of the present invention, can also be used.

REGALREZ® hydrocarbon resins, a product of Hercules, Incorporated, are fully hydrogenated a-methylstyrene, low molecular weight hydrocarbon resins, produced by polymerization and hydrogenation of pure monomer hydrocarbon feed stocks. Grades 1094, 3102, 6108, and 1126 are highly stable, light-colored low molecular weight, nonpolar resins suggested for use in plastics modification, adhesives, coatings, sealants, and caulks.

The resins are compatible with a wide variety of oils, waxes, alkyds, plastics, and elastomers and are soluble in common organic solvents.

AKRON® P Series resins, a product of Arakawa Chemical, U.S.A., are deeply hydrogenated, low molecular weight hydrocarbon tackifying resins with a wide range of compatibility with styrenic block copolymers and melt points. These resins also have excellent heat and weather resistance.

ZONATAC®501 Lite resin, a product of Arizona Chemical Co., has a softening point of 105°C, a Gardner color (50% in heptane) of 1-and a Gardner color neat (pure) of 2+; (a Gardner color of 1-(50% in heptane) is approximately equal to APHA color = 70) a specific gravity (25°/25°C) of 1.02 and a flash point (closed cup, °F) of 480°F (249°C).

Extending oils which may be used in the extrudable elastomeric composition should be capable of being melt processed with the other components of the extrudable elastomeric composition without degrading. An exemplary extending oil is a white mineral oil available under the trade designation Drakeol 34 from the Pennzoil Company Pennreco Division. Drakeol 34 has a specific gravity of 0.864-0.878 at 60°F (16°C), a flash point of 460°F (238°C), and viscosity of 370-420 SUS (0.8-0.9 cm2/sec) at 100°F (38°C). Suitable vegetable oils and animal oils or their derivatives may also be used as the extending oil.

The components of the extrudable elastomeric composition used to form the elastic sheet can be utilized over broad ranges of the amounts of each component. As a guide, the best results have been obtained when utilizing a five component extrudable elastomeric composition of an elastomeric block copolymer, a metallocene polyolefin, a crystalline polyolefin, a tackifying resin, and an extending oil. The following ranges, as shown in Table 1, are exemplary.

It is emphasized that these ranges are merely illustrative, serving as a guide for amounts of the various components in the composition.

**TABLE 1**

| | Weight % |
|---|---|
| Elastomeric block copolymer, e.g. S-EB-S or S-EP-S | 25-75 |
| Polyolefin | 12-60 |
| Tackifier | 13-28 |
| Extending Oil | 0-15 |

As stated previously, while the extrudable elastomeric composition used to form the elastic sheet has been discussed in terms of a multi-component extrudable composition, crystalline polyolefin, which functions as a flow promoter for the composition can be substituted by other compatible flow promoters or processing aids, or can be eliminated altogether where the tackifying resin can also act as the flow promoter and/or extending oil. The extending oil, which functions as a processing aid, may also be substituted by other compatible processing aids or can be eliminated altogether where the tackifying resin can also act as the extending oil. For example, low molecular weight hydrocarbon resins such as REGALREZ® tackifier can also act as the viscosity reducer and/or the extending oil, whereby the extrudable composition may contain the elastomeric polymer(s) and the tackifying resin (e.g., REGALREZ® tackifier).

While the principal components of the extrudable elastomeric composition used to form the elastic sheet have been described in the foregoing, such extrudable elastomeric composition is not limited thereto, and can include other components not adversely affecting the extrudable elastomeric composition attaining the stated objectives. Exemplary materials which could be used as additional components would include, without limitation, pigments, antioxidants, stabilizers, surfactants, waxes, flow promoters, solvents, particulates, and materials added to enhance processability and pellet handling of the composition.

Extrudable elastic compositions are preferably prepared by blending from 60 - 75 %wt of a polystyrene-hydrogenated polybutadiene-polystyrene (S-EB-S) or polystyrene-hydrogenated polyisoprene-polystyrene (S-EP-S) thermoplastic elastomeric block copolymer, wherein at least one of the polystyrene blocks has a number average molecular weight from 6000 to 12000 and the hydrogenated poly(conjugated diene) have a number average molecular weight from 60,000 to 110,000, from 12 to 60 wt of a polyclefin, from 13 to 28 %wt of a tackifying resin, and from 0-15 %wt of an extending oil.

The term "elastic" is used herein to mean any material which, upon application of a biasing force, is stretchable, that is, elongatable at least about 60 percent (i.e., to a stretched, biased length which is at least about 160 percent of its relaxed unbiased length) and which, will recover at least 55 percent of its elongation upon release of the stretching, elongating force. A hypothetical example would be a one inch (2.54 cm) sample of a material which is elongatable to at least 1.60 inches (4.06 cm) and which, upon being elongated to 1.60 inches (4.06 cm) and released, will recover to a length of not more than 1.27 inches (3.23 cm). Many elastic materials may be elongated by much more than 60 percent (i.e., much more than 160 percent of their relaxed length), for example, elongated 100 percent or more, and many of these will recover to substantially their initial relaxed length, for example, to within 105 percent of their initial relaxed length, upon release of the stretching force.

As used herein, the term "stress relaxation" refers to the percent loss of tension or load between the maximum load or force encountered after elongating an elastic material at a specified rate of extension to a predetermined length (or the load or force measured at some initial length) and the remaining load or force measured after the sample has been held at that length for a specified period of time, for example, from about 10 minutes to about 30 minutes. Except where otherwise noted for the present invention, stress relaxation is expressed as a percentage loss of the initial load encountered at a specified extension of an elastic material. The stress relaxation is determined by calculating the difference between the initial maximum load measured after elongating an elastic material at a rate of 20 inches (50.8 cm) per minute to an elongation of 160 percent (i.e., to 260 percent of the material's initial length) and the remaining load measured after that sample was held at that length for 30 minutes divided by the initial maximum load at that length. Testing may be performed on an Instron Model 5565 Universal Test Machine using ASTM microtensile specimens.

Stress relaxation after 30 minutes at, for example, an elongation of 160 percent (i.e., to 260 percent of the material's initial length - from 100 mm to 260 mm) may be expressed as a percentage utilizing the following equation: stress relaxation = (peak load_{160%} - load_{160%} @30 min)/(peak load_{160%}) *100.

As used herein, the term "tensile strength" refers to the resistance of an elastic material to being elongated as determined in accordance with ASTM 412 Method using microtensile specimens that are cut from films. Films formed from a blend of an elastomeric block copolymer and other materials such as, for example, a polyolefin (metallocene and/or crystalline), a tackifier, and/or an extending oil were compression molded. Tensile testing may be performed on an Instron Model 5565 Universal Test Machine.

As used herein, the term "recoverable energy" refers to the energy stored by an elastic material when it is elongated to a specified length. Recoverable energy is measured utilizing a tensile testing apparatus such as, for example, an Instron Model 5565 Universal Test Machine by elongating a sample of an elastic material sample at 1 inch/minute (2.54 cm/min) to 150 percent elongation (i.e., to 250 percent of the material's initial relaxed length) and cycling back to zero load for 1 hysteresis loop. The percent recoverable energy is determined by dividing the area under the retraction curve of the first hysteresis loop by the area under the elongation curve of the first hysteresis loop and then multiplying by 100.

As used herein, the "number average molecular weight" was determined utilizing gel permeation chromatography techniques for linear anionic polymers. All molecular weights are measured prior to hydrogenation which will increase the molecular weights by a small amount. The molecular weights of linear polymers or unassembled linear segments of polymers such as mono-, di-, triblock, etc., arms of star polymers before coupling are conveniently measured by Gel Permeation Chromatography (GPC), where the GPC system has been appropriately calibrated. For anionically polymerized linear polymers, the polymer is essentially monodisperse (weight average molecular weight/number average molecular weight ratio approaches unity). For materials to be used in the columns of the GPC, styrene-divinyl benzene gels or silica gels are commonly used and are excellent materials. Tetrahydrofuran is an excellent solvent for polymers of the type described herein. A refractive index detector may be used.

### Comparison Examples A and B

In Comparison Examples A and B, the styrenic block copolymers that have been used to make elastic fibers and films were compounded in formulations which contained 63% by weight of the block copolymer, 20% by weight of a polyethylene resin, and 17% by weight of a tackifying resin. The compositions and properties are shown in Table 2.

Extrudable compositions for each Example were pressed from pellets into films using heat and pressure according to conventional compression molding techniques. The films were cut into ASTM microtensile test specimens. The stress-strain properties of the pressed films were determined in accordance with ASTM D-412 utilizing a Constant Rate of Extension Tester, Instron Model 5565 Universal Testing Instrument. Each sample was placed lengthwise in jaw faces, with a jaw span of 0.75 inches (1.91 cm). The Instron Model 5565 Universal Test Instrument crosshead speed was set at 2 inches per minute (5.1 cm/min) for the first series of tests measuring the Stress-Strain properties. In addition, stress relaxation and hysteresis tests were measured using the Instron Model 5565 Universal Test Machine and determined as previously described.

### Example A and B

Examples A and B represent the present invention for comparison to the polymer performance of comparison examples A and B. The styrenic block copolymers in example A and B have polystyrene -hydrogenated isoprene-polystyrene and polystyrene-hydrogenated polybutadiene-polystyrene structure, respectively. The property data presented in Table 2 show the benefits of utilizing the block copolymer of present invention for improved stress relaxation and hysteresis performance at elevated (40°C) temperature.

Comparative Example A and Example A both use SEPS polymers. It can be seen that Example A using a polymer within the scope of this invention exhibits lower stress relaxation and higher hysteresis recovery than Comparative Example A whose polymer doesn't have a styrene block of at least 6000 number average molecular weight. Comparative Example B and Example B both use SEBS polymers. It can be seen that Example B using a polymer within the scope of this invention exhibits lower stress relaxation and higher hysteresis recovery than Comparative Example B whose polymer doesn't have a styrene block of at least 6000 number average molecular weight.

All of the above compositions had melt flow rates in excess of 1 g/10 min. as can be seen in Table 2. Melt flow rates were determined by ASTM D1238. Another polymer was tested. It had styrene-hydrogenated diene-styrene blocks of Mₙ 11,000-122,000-12,000 and a polystyrene content of 14.6%. The overall Mₙ was 143,000. The melt flow rate of the composition was much less than 1 g/10 min.. The composition was unsuitable because it did not flow.

**TABLE 2**

| EXAMPLES OF BLEND COMPOSITIONS FOR IMPROVED STRESS RELAXATION AND TENSILE PROPERTIES | | | | |
|---|---|---|---|---|
| Examples | Comp. Ex. A | Ex. A | Comp. Ex. B | Ex. B |
| Compositions, %wt | | | | |
| S-EP-S polymer 1) | 63 | | | |
| S-EP-S polymer 2) | | 63 | | |
| S-EB-S/S-EB polymer 3) | | | 63 | |
| S-EB-S polymer 4) | | | | 63 |
| Tackifier 5) | 17 | 17 | 17 | 17 |
| Polyethylene 6) | 20 | 20 | 20 | 20 |
| Total 7) | 100 | 100 | 100 | 100 |
| Melt Flow 230°C/5Kg, g/10 min. | 9.7 | 2.2 | 16 | 1.8 |

| Mechanical Properties at 23°C | | | | |
|---|---|---|---|---|
| Stress Relax, % | 22 | 18 | 33 | 27 |
| 100 modulus, MPa (psi) | 1.45 (210) | 198 | 190 | 197 |
| 300% modulus, MPa (psi) | 2.45 (355) | 320 | 262 | 272 |
| 500% modulus, MPa (psi) | 3.79 (550) | 500 | 370 | 387 |
| Tensile Str., MPa (psi) | 10.34 (1500) | 1388 | 1210 | 1220 |
| Elong. at Break, % | 870 | 902 | 1070 | 1030 |
| Hysteresis test Recovery, % | 80 | 82 | 66 | 66 |

| Mechanical Properties at 40°C | | | | |
|---|---|---|---|---|
| Stress Relax, % | 47 | 37 | 64 | 52 |
| Hysteresis test Recovery, % | 75 | 80 | 63 | 69 |

| | | | | |
|---|---|---|---|---|
| 1) Mₙ=5600+51000+5600 | | | | |
| 2) Mₙ=6300+67000+7700 | | | | |
| 3) Mₙ=5200+73000+5200 (70%wt); Mₙ=5200+36500 (30 %wt) | | | | |
| 4) Mₙ=5400+82000+8700 | | | | |
| 5) Regalrez 1126 | | | | |
| 6) NA 604-001 | | | | |
| 7) All include 0.15 wt of Ethanox 330 antioxidant additive. | | | | |

## Claims

1. An elastomeric composition, comprising:
from 25% to 75% by weight of a block copolymer having at least two monoalkenyl arene blocks separated by a hydrogenated conjugated diene block wherein one monoalkenyl arene block is larger than the other monoalkenyl arene block, the largest monoalkenyl arene block is at least 5% larger than the smallest block, and at least one of the monoalkenyl arene blocks has a number average molecular weight from 6,000 to 12,000, and a monoalkenyl arene content from 13 to 24 %wt;
from 12% to 60% by weight of a polyolefin; and
from 13% to 28% by weight of a tackifying resin; wherein the melt flow rate of the composition is at least 1 g/10min at 230°C/5 kg.

2. The composition of claim 1, wherein the block copolymer has the structure polystyrene-hydrogenated polybutadiene-polystyrene or polystyrene-hydrogenated polyisoprene-polystyrene.

3. The composition of claim 1 or 2, further comprising an extending oil.

4. The composition of any one of claims 1-3, wherein the polyolefin is selected from the group consisting of a low density polyethylene, a linear low density polyethylene, a metallocene polyethylene or a combination of these polyolefin resins.

5. The compcsition of any one of claims 1-4, wherein the tackifier resin is a hydrogenated hydrocarbon resin.

6. The composition of any one of the preceding claims, wherein the block copolymer is linear and has an overall number average molecular weight of from 70,000 to 120,000.

7. The composition of any one of the preceding claims, wherein the block copolymer the largest monoalkenyl arene block is at least 10% larger than the smallest monoalkenyl arene block.

8. The composition of any one of the preceding claims, wherein the block copolymer the largest monoalkenyl arene block is at most 80% larger than the smallest monoalkenyl arene block.

9. Elastic films or fibers containing the elastomeric composition according to any one of the preceding claims.

10. Diaper waistbands or non-woven fabrics prepared from elastic films or fibers according to claim 9.

## Patentansprüche

1. Elastomere Zusammensetzung, umfassend:
25 bis 75 Gew.-% eines Blockcopolymers, das wenigstens zwei Monoalkenylarenblöcke aufweist, die durch einen hydrierten konjugierten Dienblock getrennt sind, worin ein Monoalkenylarenblock größer als der andere Monoalkenylarenblock ist, wobei der größte Monoalkenylarenblock um wenigstens 5% größer ist als der kleinste Block und wobei wenigstens einer der Monoalkenylarenblöcke ein zahlenmittleres Molekulargewicht von 6.000 bis 12.000 aufweist und worin der Monoalkenylarengehalt 13 bis 24 Gew.-% beträgt;
12 bis 60 Gew.-% eines Polyolefins; und
13 bis 28 Gew.-% eines klebrigmachenden Harzes; worin der Schmelzindex der Zusammensetzung wenigstens lg /10 min bei 230°C/5 kg beträgt.

2. Zusammensetzung nach Anspruch 1, worin das Blockcopolymer die Struktur Polystyrol-hydriertes Polybutadien-Polystyrol oder Polystyrol--hydriertes Polyisopren-Polystyrol aufweist.

3. Zusammensetzung nach Anspruch 1 oder 2, die weiterhin ein Strecköl umfaßt.

4. Zusammensetzung nach einem der Ansprüche 1 bis 3, worin das Polyolefin aus der aus einem Polyethylen niederer Dichte, einem linearen Polyethylen niederer Dichte, einem Metallocenpolyethylen oder aus einer Kombination dieser Polyolefinharze bestehenden Gruppe ausgewählt ist.

5. Zusammensetzung nach einem der Ansprüche 1 bis 4, worin das klebrigmachende Harz ein hydriertes Kohlenwasserstoffharz ist.

6. Zusammensetzung nach einem der vorstehenden Ansprüche, worin das Blockcopolymer linear ist und ein zahlenmittleres Gesamtmolekulargewicht von 70.000 bis 120.000 aufweist.

7. Zusammensetzung nach einem der vorstehenden Ansprüche, wobei in dem Blockcopolymer der größte Monoalkenylarenblock um wenigstens 10% größer ist als der kleinste Monoalkenylarenblock.

8. Zusammensetzung nach einem der vorstehenden Ansprüche, wobei in dem Blockcopolymer der größte Monoalkenylarenblock um höchstens 80% größer ist als der kleinste Monoalkenylarenblock.

9. Elastische Folien oder Fasern mit einem Gehalt an der elastomeren Zusammensetzung nach einem der vorstehenden Ansprüche.

10. Windelhüftbänder oder Vliesstoffe, hergestellt aus elastischen Folien oder Fasern nach Anspruch 9.

## Revendications

1. Composition élastomère, comprenant :
de 25% à 75% en poids d'un copolymère bloc comportant au moins deux blocs de monoalcényl arène séparés par un bloc de diène conjugué hydrogéné dans lequel un bloc de monoalcényl arène est plus grand que l'autre bloc de monoalcényl arène, le plus grand bloc de monoalcényl arène étant au moins de 5% plus grand que le plus petit bloc, et au moins l'un des blocs de monoalcényl arène a un poids moléculaire moyen numérique de 6.000 à 12.000, et une teneur en monoalcényl arène de 13 à 24% en poids;
de 12% à 60% en poids d'une polyoléfine; et
de 13 à 28% en poids d'une résine assurant un collage;
dans laquelle le débit de matière fondue de la composition est d'au moins 1 g/10 minutes à 230°C/5 kg.

2. Composition suivant la revendication 1, dans laquelle le copolymère bloc a la structure polystyrène-polybutadiène hydrogéné-polystyrène ou polystyrène-polyisoprène hydrogéné-polystyrène.

3. Composition suivant l'une ou l'autre des revendications 1 et 2, comprenant de plus une huile diluante.

4. Composition suivant l'une quelconque des revendications 1 à 3, dans laquelle la polyoléfine est choisie dans le groupe comprenant un polyéthylène basse densité, un polyéthylène basse densité linéaire, un polyéthylène de métallocène et une combinaison de ces résines de polyoléfine.

5. Composition suivant l'une quelconque des revendications 1 à 4, dans laquelle la résine assurant un collage est une résine d'hydrocarbure hydrogéné.

6. Composition suivant l'une quelconque des revendications précédentes, dans laquelle le copolymère bloc est linéaire et a un poids moléculaire moyen numérique total de 70.000 à 120.000.

7. Composition suivant l'une quelconque des revendications précédentes, dans laquelle le plus grand bloc de monoalcényl arène du copolymère bloc est d'au moins 10% plus grand que le plus petit bloc de monoalcényl arène.

8. Composition suivant l'une quelconque des revendications précédentes, dans laquelle le plus grand bloc de monoalcényl arène du copolymère bloc est de tout au plus 80% plus grand que le plus petit bloc de monoalcényl arène.

9. Films ou fibres élastiques contenant la composition élastomère suivant l'une quelconque des revendications précédentes.

10. Ceintures de couche à jeter ou tissus non tissés préparés à partir de films ou fibres élastiques suivant la revendication 9.
